# EUROPEAN PATENT SPECIFICATION

(11) **EP 1 885 013 B1**
(45) Date of publication and mention of the grant of the patent: **01.05.2013**
(21) Application number: 06756773.5
(22) Date of filing: 24.05.2006
(51) Int. Cl.: F16K 31/06, H01M 8/04

(54) **FUEL CELL SYSTEM**
BRENNSTOFFZELLENSYSTEM
SYSTÈME DE PILE À COMBUSTIBLE

(30) Priority: 26.05.2005 JP 2005154667
(43) Date of publication of application: 06.02.2008
(73) Proprietor: TOYOTA JIDOSHA KABUSHIKI KAISHA, Toyota-shi, Aichi-ken, 471-8571 (JP)
(72) Inventor: BONO, Tetsuya, Aichi-ken, 471-8571 (JP)
(74) Representative: Kuhnen & Wacker
(86) International application number: PCT/JP2006/310825
(87) International publication number: WO 2006/126715

(56) References cited:
- EP-A- 1 195 830
- JP-A- 2001 297 785
- JP-A- 2002 222 658
- JP-A- 2004 253 212
- US-A1- 2003 064 271

## Description

### BACKGROUND

The present invention relates to a fuel cell system as recited in claim 1 and particularly to a technology that suppresses strange noise generation and the generation of mechanical component stress.

As per Japanese Patent Application Laid Open No. 2002-373687, a fuel cell system produces electricity by means of an electrochemical reaction that is produced as a result of constituting a fuel cell in which a plurality of single cells obtained by sandwiching an electrolyte between an anode electrode and a cathode electrode are stacked in a plurality of layers such that hydrogen (fuel gas) that is supplied via a hydrogen supply pipe connected to a hydrogen supply port of the fuel cell is made to contact the anode electrode and air (oxygen gas) that is supplied via an air supply pipe connected to an air supply port of the fuel cell is made to contact the cathode electrode.

The Japanese Patent Application Laid Open No. 2002-373687 discloses a fuel cell system which, when the gas that is fed to and from the fuel cell is pressure-fed, suppresses the generation of noise caused by vibrations of the piping by providing a vibration-preventing member in the piping through which gas is pressure-fed with pulsations.

### SUMMARY

The starting up of the fuel cell system, in which a fuel cell inlet shutoff valve ('FC inlet valve' hereinbelow) is provided midway along the hydrogen supply pipe that supplies hydrogen from the hydrogen supply pipe to the anode electrode of the fuel cell, opens the main stop valve (source valve) of the hydrogen supply source, and then opens the FC inlet valve.

However, after opening the main stop valve, when the FC inlet valve is opened in a state where the upstream side has not yet been sufficiently pressurized more than the FC inlet valve of the hydrogen supply pipe, because the high pressure hydrogen and pressurized air are supplied to the hydrogen supply pipe and the gas passage in the fuel cell which are at atmospheric pressure during system startup and suddenly pressurized, there is the problem that strange noise is generated in the stack as a result of shock and vibration stress is generated in mechanical components.

This problem is not limited to the passage of the hydrogen supply system (hydrogen supply pipe) and also occurs in a passage of the hydrogen circulatory system that returns hydrogen offgas exhausted by the hydrogen cell to the hydrogen supply pipe, a passage of the hydrogen discharge system that discharges hydrogen offgas to the outside, a passage of the air discharge system that discharges air offgas from the fuel cell, and a passage in which gas supplied to the fuel cell and offgas discharged from the fuel cell is passed.

Even when the vibrating-preventing member mentioned in Japanese Patent Application Laid Open No. 2002-373687 is provided in a gas passage such as a hydrogen supply pipe or the like as a countermeasure, only vibrations in a specified frequency range can be absorbed and cannot be said to be adequate for solving the above problem. Further, such sudden pressurization is not necessarily limited to at the startup of the fuel cell.

EP1195830 discloses a fuel cell system comprising a fuel cell and a main air-flow passage comprising a silencer.

US20030064271 discloses a fuel cell system comprising a sound control system.

In addition, in a fuel cell system that comprises a fuel cell that has a solid polymer electrolyte membrane ('electrolyte membrane' hereinbelow) sandwiched between an anode electrode and a cathode electrode, the difference between the hydrogen gas supply pressure of the anode electrode and the air supply pressure of the cathode electrode ('pressure difference across electrodes' hereinbelow) must also be controlled at or below a predetermined value in order to prevent damage to the electrolyte membrane and increase the lifespan thereof and so forth.

Therefore, an object of the present invention is to provide a fuel cell system capable of suppressing strange noise generation caused by sudden pressurization and the generation of mechanical component stress.

The fuel cell system of the present invention is a fuel cell system comprising a fuel cell that generates power upon receiving a supply of a reactive gas and discharges a reactive offgas, a gas passage in which the reactive gas or the reactive offgas flows, a valve device that is installed on the gas passage, and a control device that controls the opening of the valve device, wherein, when the gas pressure in the gas passage increases, the control device controls the opening of the valve device in accordance with the degree of the pressure difference between the upstream and downstream sides of the valve device so that the opening area increases continuously or intermittently.

According to this constitution, since the downstream (for example, gas passage between the valve device and fuel cell, gas passage in fuel cell, and so forth) pressure of the valve device reduces and corresponds to atmospheric pressure as system startup, even when the gas pressure in the gas passage increases when a high-pressure or pressurized reactive gas is supplied, the sudden pressurization in the gas passage can be suppressed by continuously or intermittently increasing the opening area of the valve device in accordance with the degree of the pressure difference between and upstream and downstream sides of the valve device (the valve opening and closing are repeated in predetermined cycles, for example).

Furthermore, the fuel cell system of the present invention is a fuel cell system comprising a fuel cell that generates power upon receiving a supply of a reactive gas and discharges a reactive offgas, a gas passage in which the reactive gas or the reactive offgas flows, a valve device that is installed on the gas passage, and a control device that controls the opening of the valve device, wherein, when the pressure difference between the upstream and downstream sides of the valve device is equal to or more than a predetermined value, the control device controls the opening of the valve device in accordance with the degree of the pressure difference so that the opening area increases continuously or intermittently.

According to this constitution, the downstream pressure reduces and corresponds to atmospheric pressure as system startup, for example, even when there is a risk of sudden pressurization when high pressure or pressurized reactive gas is supplied, the sudden pressurization can be suppressed by obtaining a gradual decrease in the pressure difference between the upstream and downstream sides of the valve device by continuously or intermittently increasing the opening area of the valve device until the pressure difference between the upstream and downstream sides of the valve device is less than a predetermined threshold value.

When the downstream pressure of the valve device is equal to or less than a target pressure, the control device may control the opening of the valve device in accordance with the degree of the pressure difference between the downstream pressure and target pressure.

According to this constitution, even when there is a risk of the gas passage being suddenly pressurized, by continuously or intermittently increasing the opening area of the valve device until the downstream pressure of the valve device reaches a target pressure, the pressure difference between the downstream pressure and target pressure of the valve device can be made to gradually decrease and sudden pressurization can be suppressed.

The larger the pressure difference, the smaller the amount of change in the opening area per hour of the valve device may be.

A large pressure difference means that there is a risk of sudden pressurization. Hence, according to this constitution; the generation of resonance during pressurization and the generation of mechanical component stress can be more effectively suppressed.

The 'amount of change in the opening area per hour is small' also includes the meaning that when the degree of opening of the valve device is intermittently fully open, the total opening time is short and/or the fully closed time is long in addition to meaning that the amount of change in the opening area is small, when the degree of opening of the valve device is increased continuously or stepwise. The same is true below.

The larger the volume of closed space downstream of the valve device is, the smaller the amount of change in the opening area per hour of the valve device may be.

According to this constitution, even in cases where the gas passage in the fuel cell, for example, is contained in the pressurized closed space and the closed space volume is large, the generation of resonance and the generation of mechanical component stress and so forth during sudden pressurization can be effectively suppressed.

The valve device may be at least one of an open/close-type solenoid valve or a variable opening-type solenoid valve.

For example, when the valve device is an open/close-type solenoid valve, that is, in the case of a valve device that permits the selection of fully open (opening command: ON) or fully closed (opening command: OFF), sudden pressurization can be suppressed by obtaining a gradual reduction in the pressure difference by repeating fully open and fully closed in predetermined cycles.

When the valve device is an open/close-type solenoid valve, the opening area of the valve device may be changed in accordance with duty control.

In this case, the duty ratio (the ON-OFF time ratio during ON-OFF repetition) may be fixed or the duty ratio may be made to gradually decrease or increase as time elapses.

On the other hand, when the valve device is a variable opening-type solenoid valve, that is, in the case of a device that is capable of executing variable control in linear manner, for example, of the opening of the valve device between fully open and fully closed, sudden pressurization can be suppressed by obtaining a gradual reduction in the pressure difference by gradually increasing or intermittently changing the opening of the valve device, for example.

The valve device may be a solenoid valve that is provided downstream of a regulator valve that is provided on the gas passage.

According to this constitution, the durability and seal tightness of the solenoid valve can be simplified by continuously or intermittently exercising opening control by means of the downstream solenoid valve of the gas pressure that has been reduced by the regulator (mechanical-type regulator, reduction valve, and so forth, for example). Further, deterioration of the control of the solenoid valve caused by the effects of high pressure gas is also suppressed.

The amount of change in the opening area per hour of the valve device may be set on the basis of the downstream pressure of the valve device.

According to the constitution, the downstream pressure of the valve device can be fed back to the opening setting of the valve device.

The valve device may be a source valve of a high-pressure gas tank that is connected to the gas passage.

According to this constitution, so too in a fuel cell system in which a valve device that permits and prohibits a gas supply to the fuel cell or a valve device for regulating (reducing) the gas supply pressure to the fuel cell is not installed midway along the gas passage, the sudden pressurization of a gas supply passage that extends to the fuel cell or a gas passage in the fuel cell or the like can be suppressed by controlling the source valve of the high-pressure gas tank.

A plurality of the valve devices may be provided in series on the gas passage and the opening area of a downstream-side valve device may be controlled in correspondence with the open/closed state of the upstream-side valve device.

According to this constitution, the opening of the upstream-side valve device among the valve devices disposed in series can mainly be controlled and the opening of the downstream-side valve device can be dependently controlled. Further, when only the upstream-side valve device is open while the downstream-side valve device remains closed at the startup of the system, for example, the closed space between the upstream-side valve device and downstream-side valve device functions as a buffer for suppressing the sudden pressurization of the gas passage further downstream (gas passage in the fuel cell or gas supply passage extending to the fuel cell, for example).

The gas pressure supplied to the anode side of the fuel cell and the gas pressure supplied to the cathode side may undergo coordinated control.

Here, coordinated control performs pressure regulation (implements opening control at least of the solenoid valve on the other side) so that the gas pressure on the other side changes in correspondence with solenoid valve opening control that is established in correspondence with the gas pressure change on the first side of the anode side (fuel gas side) or cathode side (oxygen gas side), for example.

For example, the valve device disposed in the gas passage on the high-pressure fuel gas side can be principally controlled and, accordingly, the solenoid value and/or the gas supply means (compressor, for example) disposed in the gas passage on the oxygen gas side can be controlled. Hence, the pressure difference between the fuel gas supply pressure from the fuel gas supply passage to the fuel cell and the oxygen gas supply pressure from the oxygen gas supply passage to the fuel cell can be controlled in a suitable range.

In a fuel cell system in which a fuel cell has an electrolyte membrane sandwiched between an anode electrode and a cathode electrode in particular, the electrolyte membrane can be protected from damage and so forth by suppressing any excessive increase in the pressure difference between the electrodes (pressure difference between the fuel gas supply pressure and oxygen gas supply pressure).

A portion of the gas passage is constituted by mutually parallel passages, one of which is a passage that has a larger pressure loss than the other passage and, when the pressure difference is equal to or more than a predetermined value, a passage with a large pressure loss may be used instead of continuously or intermittently increasing the opening area of the valve device.

A passage with a larger pressure loss than that of the other passage can be constituted by providing a narrow diameter than that of the other passage or providing an elbow or bend midway along the passage or by providing an element that increases the fluid resistance such as an aperture diaphragm or filter midway along the passage, for example.

At the startup of the fuel cell, the control device may control the opening of the valve device so that the opening area increases continuously or intermittently. A gas passage that has dropped to a predetermined pressure equivalent to atmospheric pressure (the gas supply passage and gas passage in a fuel cell, for example) is at risk of sudden pressurization upon receiving a high-pressure or pressurized reactive gas or a supply of reactive offgas at the startup of the fuel cell such as in the event of startup after a long stoppage or a restart after an intermittent operation, for example. The control device is therefore effective in suppressing such sudden pressurization.

As one startup method of the fuel cell system, when the downstream pressure of the valve device is equal to or less than the target pressure, the reactive gas may be supplied to the fuel cell so that the pressure difference between the downstream pressure and target pressure is gradually reduced. Such a constitution enables control of sudden pressurization.

Furthermore, as another startup method, when the pressure difference between the upstream and downstream sides of the valve device is equal to or less than a predetermined value, the reactive gas may be supplied to the fuel cell to gradually reduce the pressure difference. Such a constitution allows sudden pressurization to be suppressed.

In the startup method of the fuel cell system, as a specific procedure for gradually reducing the pressure difference between the downstream pressure of the valve device and the target pressure or gradually reducing the pressure difference between the upstream and downstream sides of the valve device, the pressure rise amount per unit time which reduces the opening of the valve device during pressurization to below the opening during normal operation (one third of the opening during normal operation, for example) is made equal to or less than a fixed amount (10 kPa/100 msec, for example) or the gas supply amount per unit time (flow rate) is made equal to or less than a fixed amount (1L/100 msec, for example).

In addition to this procedure, the valve opening per unit time can be varied, and the upstream pressure difference can be gradually reduced by slowly opening the valve at the start of pressurization (5 steps/sec, for example) and quickly opening the valve as time elapses from the start of pressurization (20 steps/sec, for example).

Furthermore, when a solenoid valve (open/close-type solenoid valve) that is capable of electrically controlling the valve opening only in two states of open and closed (ON and OFF) is employed, the pressure difference can also be gradually reduced by controlling the open/close duty ratio (ON and OFF ratio) instead of controlling the valve opening. For example, control is performed so that the ON time ratio is small at the start of pressurization and the ON time ratio is large after a predetermined time has elapsed.

### BRIEFDESCRIPTION OF DRAWINGS

Fig. 1 is a schematic constitutional view of a first embodiment of the fuel cell system according to the present invention;
Fig. 2 is a flow chart that illustrates the control flow of an FC inlet valve at the startup of the fuel cell system shown in Fig. 1;
Fig. 3 is a time chart that shows one control example of a case where an FC inlet valve is an open/close type solenoid;
Fig. 4 is a time chart showing the behavior of pressure resulting of the one control example shown in Fig. 3;
Fig. 5 is a time chart that shows another control example of a case where the FC inlet valve is an open/close type solenoid;
Fig. 6 is a time chart that shows one control example of a case where the FC inlet valve is a variable opening-type solenoid valve;
Fig. 7 is a flow chart that illustrates the control flow of the FC inlet valve at the startup of the fuel cell system according to a second embodiment;
Fig. 8 is a flow chart that illustrates the control flow of the FC inlet valve at the startup of the fuel cell system of a third embodiment;
Fig. 9 is a flow chart that illustrates the control flow of the FC inlet valve at the startup of the fuel cell system of a fourth embodiment;
Fig. 10 is a schematic constitutional view of a fuel cell system according to a fifth embodiment; and
Fig. 11 is a schematic constitutional view of a fuel cell system according to a sixth embodiment.

### DETAILED DESCRIPTION

### First Embodiment

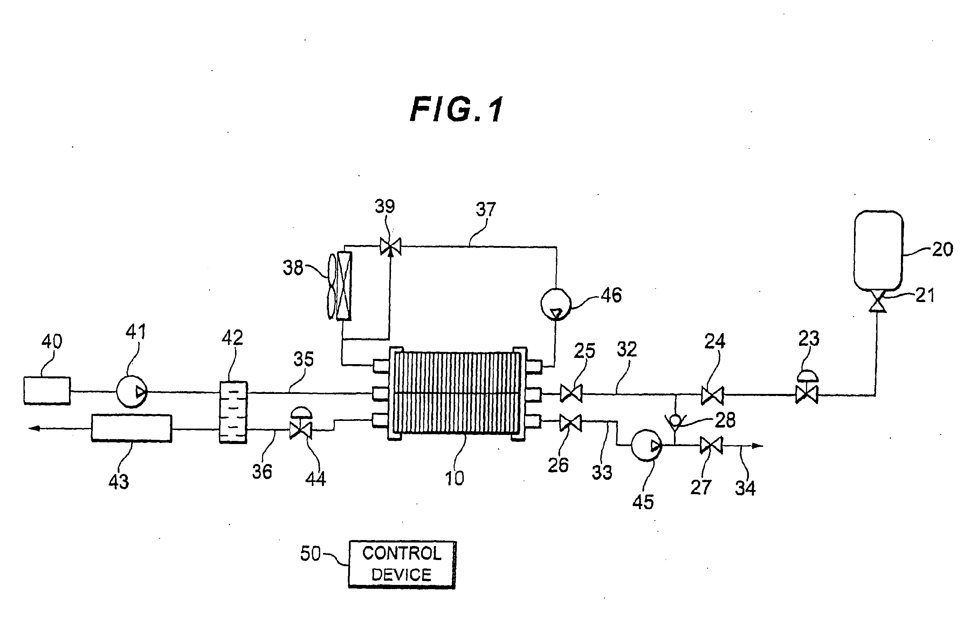

Fig. 1 is a schematic constitutional view of a first embodiment of the fuel cell system according to the present invention. The fuel cell system 1 can also be applied to a fixed power generation system, for example, in addition to an on-vehicle power generation system of a fuel cell vehicle.

A fuel cell 10 is a stacked body of cells that generate power by means of an electrochemical reaction between fuel gas (reactive gas) and oxygen gas (reaction gas). The respective cells have a constitution in which an anode electrode and cathode electrode are disposed on both sides of an electrolyte membrane.

Air as oxygen gas is supplied to the cathode side of the fuel cell 10. The air is sucked via the filter 40 and, after being compressed by the compressor 41, the air is humidified by the humidifier 42 and supplied from the piping (gas passage) 35 to the fuel cell 10. The exhaust air from the cathode (known as 'cathode offgas' (reactive offgas) hereinbelow) is discharged to the outside via piping 36 and a muffler 43. The air supply pressure is controlled by the opening of a pressure regulator valve 44.

Hydrogen that is stored in a hydrogen tank (high pressure gas tank) 20 is supplied as fuel gas via piping (gas passage) 32 to the anode of the fuel cell 10. A fuel reformer or hydrogen storage alloy or the like may be used instead of the hydrogen tank 20 for supplying hydrogen generated by means of a reform reaction in which the source material is an alcohol, hydrocarbon, or aldehyde or the like to the anode.

A shutoff valve (source valve) 21 of the hydrogen tank 20, a regulator valve 23 that reduces the primary pressure to a predetermined secondary pressure, an open/close valve 24, and a fuel cell inlet valve (valve device) 25 are installed on piping 32 in order from upstream.

The fuel cell inlet valve ('FC inlet valve' hereinbelow) 25 is an open/close type solenoid for which the selection of only one of fully open and fully closed for the opening ('valve opening' hereinbelow) of a valve body that is capable of sliding in a valve enclosure and which is can be seated in a valve seat, or a variable opening-type solenoid for which the valve opening can be variably controlled in linear manner, for example, between fully open and fully closed. For both types of solenoid, the valve opening is controlled by a control device 50.

The hydrogen stored at a high pressure in the hydrogen tank 20 is regulated (decompressed) by the regulator valve 23 and supplied to the anode of the fuel cell 10. Further, the exhaust air from the anode (called 'anode offgas' (reactive offgas) hereinbelow) is discharged to piping 33. A fuel cell outlet valve ('FC outlet valve' hereinbelow) 26 is installed on the anode outlet side of the piping 33.

The piping 33 splits into two at a midway point, with one fork being connected to a discharge pipe 34 for discharging anode offgas to the outside and the other being connected to the piping 32 via a check valve 28. A fuel gas circulation passage that is constituted by the piping 33 connected to the anode outlet of the fuel cell 10 and by piping that splits off from piping 33 and which is connected to piping 32 is provided with a hydrogen pump 45 that circulates anode offgas to the piping 32 by raising the pressure thereof.

While a discharge valve (purge valve) 27 that is provided in the discharge pipe 34 is closed, the anode offgas is circulated once again to the fuel cell 10 via the piping 32. Because the hydrogen that has not been consumed through power generation remains in the anode offgas, hydrogen can be effectively put to use as a result of being circulated in this manner.

While, on the one hand, hydrogen is used in the power generation during circulation of the anode offgas, impurities other than hydrogen such as nitrogen that has been transmitted through the electrolyte membrane from the cathode, for example, are not consumed and remain in the system. Hence, the concentration of impurities gradually increases. In this state, when the discharge valve 27 is open, the anode offgas is discharged (purged) to the outside via the discharge pipe 34 and the impurity circulation amount decreases.

Cooling water is also supplied to the fuel cell 10 in addition to hydrogen and air. The cooling water is made to flow through cooling piping 37 by means of a cooling water pump 46, is cooled by a radiator 38, and supplied to the fuel cell 10. The piping 37 splits into two upstream of the radiator 38, one branch of which bypasses the radiator 38 before recombining the radiator piping via a bypass valve 39 that is provided downstream of the radiator 38.

The control device 50 is constituted by a control computer system for a CPU, a ROM, a RAM, a HDD, an I/O interface and a display and receives the required load such as the accelerator opening signal for the vehicle (not shown) and control information from the sensors (pressure sensor, temperature sensor, fluid amount sensor, amperometer, voltmeter and so forth) that are provided in the respective parts of the fuel cell system 1, receives control information from the respective devices (compressor 41 and hydrogen pump 45 or the like) and performs control of the operations of the various valves and motors of the respective parts of the system.

Furthermore, the control device 50 controls the opening of an FC inlet valve 25 so that the opening area increases continuously or intermittently in accordance with the degree of the pressure difference between downstream and upstream of the FC inlet valve 25 when the gas pressure in the piping 32, the gas passage in the fuel cell 10, the piping 33, or the piping 34 (also collectively termed the 'gas passages' hereinbelow) increases. For the sake of expediency hereinbelow, control of the opening area is sometimes called 'control of the valve opening'.

For example, during initial pressurization such as at the startup of the fuel cell 10 or in the event of a restart after intermittent operation, when the downstream pressure of the FC inlet valve 25, that is, the pressure of the piping 32 between the FC inlet valve 25 and fuel cell 10 and of the gas passage in the fuel cell 10 is equal to or less than a predetermined pressure (target pressure), or when the pressure difference between the upstream and downstream sides of the FC inlet valve 25 is equal to or more than a predetermined value, the valve opening of the fuel cell inlet valve 25 is controlled so that the pressure difference between the upstream and downstream sides or the pressure difference between the downstream pressure and the predetermined pressure is gradually reduced.

That is, the gas passage drops in pressure to atmospheric pressure or a predetermined pressure during a restart after a long stoppage or in the event of a restart after an intermittent operation. When high-pressure hydrogen from the hydrogen tank 20 is supplied to the gas passage in such a state, a strange sound caused by shock as a result of the gas passage being suddenly pressurized, is generated and there is a risk of mechanical component stress being generated.

When the FC inlet valve 25 of this embodiment is an open/close-type solenoid valve, by implementing duty control in which fully open and fully closed are repeated in predetermined cycles, the pressure difference is gradually reduced and sudden pressurization can be suppressed. In this case, the duty ratio (ON-OFF time ratio during ON-OFF repetition) may be fixed and the duty ratio may be gradually reduced or increased as time elapses.

On the other hand, when the FC inlet valve 25 of this embodiment is a variable opening-type solenoid, sudden pressurization can be suppressed by gradually reducing the pressure difference by gradually increasing or intermittently changing the valve opening, for example.

The open and close operation of the FC inlet valve 25 is preferably controlled to reduce the amount of change in the opening area per hour because the gas passage in the fuel cell 10 is contained in the closed space further downstream than the FC inlet valve 25 and the closed space volume is large. Further, the volume of closed space downstream of the FC inlet valve 25 is called the gas passage volume from the FC inlet valve 25 to the FC outlet valve 26 that includes the gas passage in the fuel cell 10.

Furthermore, the FC inlet valve 25 may reduce the opening area change amount per hour as the pressure difference increases and may set the opening area change amount per hour on the basis of the downstream pressure of the FC inlet valve 25.

After a state where the respective valves 21, 23, 25, and 26 and so forth are closed, the piping 32 between the shutoff valve 21 and FC inlet valve 25 is first pressurized between the shutoff valve 21 and open/close valve 24 by opening the shutoff valve 21, then pressurized between the open/close valve 24 and the FC inlet valve 25 by opening the open/close valve 24, and then pressurized between the FC inlet valve 25 and FC outlet valve 26 by opening the FC inlet valve 25.

That is, as a result of sequentially opening the valves located on the upstream side of the piping 32, the interior of the piping 32 and the interior of the fuel cell 10 can be gradually pressurized while the section as far as the closed space extending from the open valve to the valve located directly therebelow is made to function as a buffer.

Thus, in the fuel cell system 1 which comprises a plurality of valves 21 to 26 in series on the piping 32, the gas passage in the fuel cell 10, and the piping 33, by controlling the opening of the downstream valve in correspondence with the open or closed state of the upstream valve, the opening of the valve ('upstream valve' hereinbelow) located relatively upstream among the valves 21 to 26 disposed in series can principally be controlled and the opening of the valve disposed relatively downstream ('downstream valve' hereinbelow) can be dependently controlled.

As a result, when only the upstream-side valve is opened while the downstream-side valve remains closed during system startup (including during restart after intermittent operation), for example, the closed space between the upstream-side valve and downstream-side valve functions as a buffer that controls the sudden pressurization of the gas passage in the fuel cell 10 and the piping 21 and 33 that extends to the fuel cell 10.

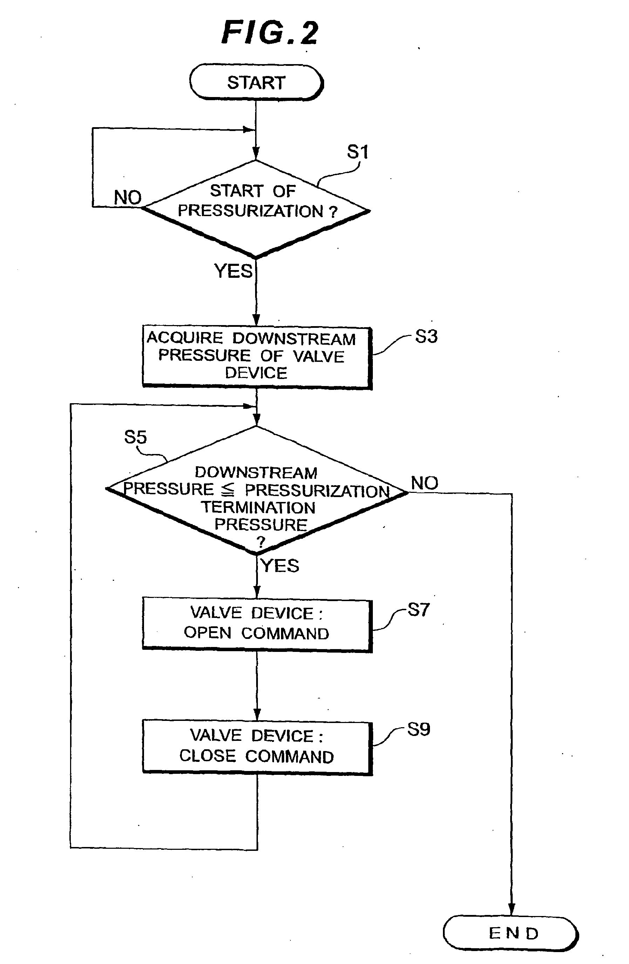

The usage of an open/close-type solenoid valve as the FC inlet valve 25 for the control flow of the FC inlet valve 25 during fuel cell startup by the control device 50 will be described next with reference to Figs. 2 to 5. Further, the valve device in Fig. 2 is an FC inlet valve 25 in this embodiment.

First, a judgment of whether the closed space between the FC inlet valve 25 and the FC outlet valve 26 is pressurized, such as a judgment of whether the piping 32 upstream of the FC inlet valve 25 is pressurized to a predetermined pressure, for example, is performed in step S1 in Fig. 2, and, when the judgment result is 'NO', the judgment of step S1 is repeated until the piping 32 upstream of the FC inlet valve 25 is pressurized to a predetermined pressure.

On the other hand, when the judgment result of step S1 is 'YES', the downstream pressure of the FC inlet valve 25 is acquired (step S3). The downstream pressure is measured by using a pressure sensor that is installed within the fuel cell 10, for example. Thereafter, in step S5, it is judged whether the downstream pressure is equal to or less than a pressurization termination pressure (target pressure) and, when the judgment result is 'NO', that is, when the downstream pressure has already exceeded the pressurization termination pressure, the subsequent processing is skipped and the control flow ends.

On the other hand, when the judgment result in step S5 is 'YES', that is, when the downstream pressure has not yet reached the pressurization termination pressure, an opening command that fully opens (turns ON) the valve opening only for a predetermined time (no more than 100 msec, for example) is sent to the FC inlet valve 25 (step S7). Thereafter, once an opening command that fully closes (turns OFF) the valve opening only for a predetermined time (no more than 100 msec, for example) has been sent to the FC inlet valve 25 (step S9), the processing returns to step S5.

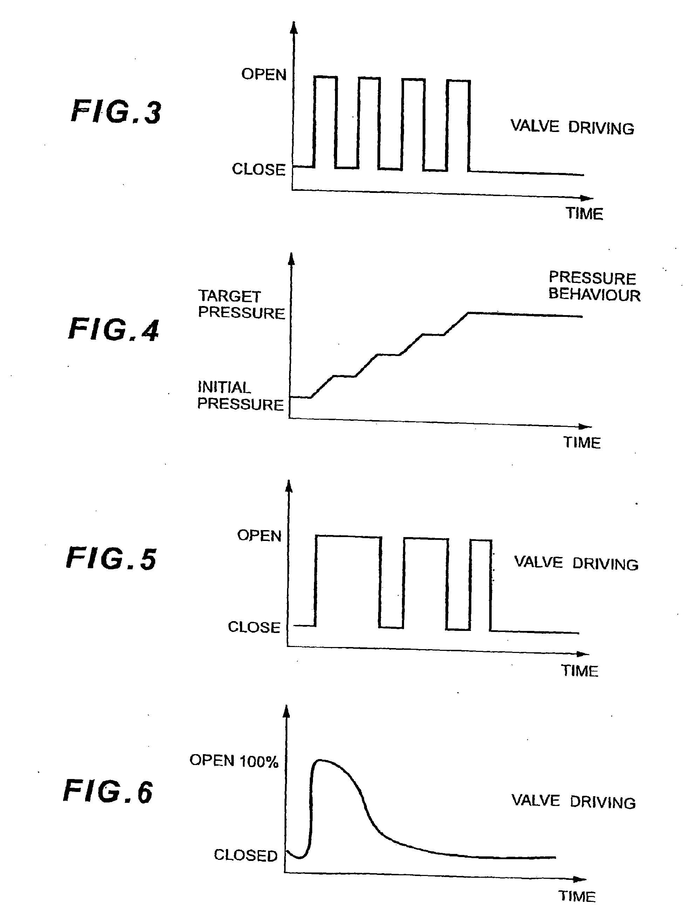

In this embodiment, because the processing of steps S7 and S9 is repeated until the downstream pressure of the FC inlet valve 25 exceeds the pressurization termination pressure, the fully open command of step S7 and the fully closed command of step S9 are repeated with the same cycles, for example. That is, as a result of the valve opening of the FC inlet valve 25 being duty controlled in a predetermined duty ratio, the FC inlet valve 25 is driven as shown in Fig. 3.

The result of the FC inlet valve 25 being driven in this manner is a pressure behavior that changes stepwise as shown in Fig. 4 as the downstream pressure of the FC inlet valve 25 changes from the initial pressure at the start of pressurization and reaches the pressurization termination pressure (target pressure). As a result, according to this embodiment, sudden pressurization is suppressed by gradually reducing the pressure difference between the downstream pressure of the FC inlet valve 25 and the pressurization termination pressure. Hence, the generation of resonance and generation of stress of the mechanical components can be suppressed.

Furthermore, in this embodiment, because the gas pressure which has been reduced by the regulator valve 23 undergoes opening control by means of the FC inlet valve 25 provided downstream, the durability and seal tightness of the FC inlet valve 25 can be simplified and a degradation of the control of the FC inlet valve 25 due to the effects of the high pressure hydrogen gas can be suppressed.

Further, when the valve opening of the FC inlet valve 25 is changed by means of duty control, as shown in Fig. 3, the duty ratio (the ON-OFF time ratio during ON-OFF repetition) may be fixed. However, as shown in Fig. 5, for example, the duty ratio may be made to gradually decrease as time elapses or, contrary to the valve driving pattern shown in Fig. 5, the duty ratio may be made to gradually increase as time elapses.

### Second Embodiment

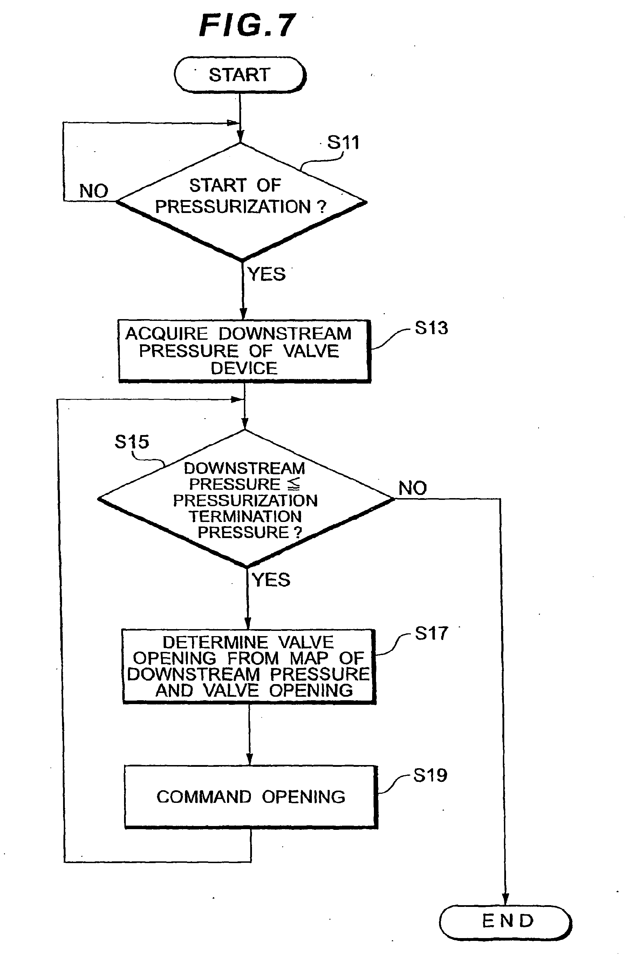

Subsequently, the usage of an open/close-type solenoid valve as the FC inlet valve 25 for the control flow according to a further embodiment of the FC inlet valve 25 during fuel cell startup by the control device 50 will be described next with reference to Figs. 6 to 7. Further, the valve device in Fig. 7 is an FC inlet valve 25 in this embodiment.

The principal difference between this embodiment and the first embodiment above is that, whereas, in the first embodiment, control (duty control) is performed by intermittently changing the valve opening of the FC inlet valve 25 that comprises an open/close solenoid valve, in this embodiment, control is performed by continuously changing the valve opening of the FC inlet valve 25 that comprises the variable opening type solenoid.

First, a judgment of whether the closed space between the FC inlet valve 25 and the FC outlet valve 26 is pressurized, such as a judgment of whether the piping 32 upstream of the FC inlet valve 25 is pressurized to a predetermined pressure, for example, is performed in step S11 in Fig. 7, and, when the judgment result is 'NO', the judgment of step S11 is repeated until the piping 32 upstream of the FC inlet valve 25 is pressurized to a predetermined pressure.

On the other hand, when the judgment result of step S11 is 'YES', the downstream pressure of the FC inlet valve 25 is acquired (step S13). The downstream pressure is measured by using a pressure sensor that is installed within the fuel cell 10, for example. Thereafter, in step S15, it is judged whether the downstream pressure is equal to or less than a pressurization termination pressure (target pressure) and, when the judgment result is 'NO', that is, when the downstream pressure has already exceeded the pressurization termination pressure, the subsequent processing is skipped and the control flow ends.

On the other hand, when the judgment result in step S15 is 'YES', that is, when the downstream pressure has not yet reached the pressurization termination pressure, the valve opening is determined by referencing a map that specifies the relationship between the downstream pressure and valve opening (step S17), a corresponding opening command is sent to the FC inlet valve 25 and the processing returns to step S13. Further, the map specifying the relationship between the downstream pressure and valve opening is specified so that, as the downstream pressure drops or the pressure difference between the downstream pressure and upstream pressure increases, for example, the valve opening is reduced.

In this embodiment, because the processing of steps S17 and S19 is repeated until the downstream pressure of the FC inlet valve 25 exceeds the pressurization termination pressure, driving is such that the valve opening of the FC inlet valve 25 changes continuously as shown in Fig. 6, for example.

As a result of the FC inlet valve 25 being driven in this manner, in this embodiment, gradual pressurization is performed so that the pressure difference between the downstream pressure and the pressurization termination pressure gradually decreases while the downstream pressure of the FC inlet valve 25 changes from the initial pressure at the start of pressurization and reaches the pressurization termination pressure (target pressure), whereby the generation of resonance and the generation of stress of the mechanical components can be suppressed.

Further, the opening area change amount per hour of the FC inlet valve 25 may be reduced as the pressure difference between the downstream pressure and the pressurization termination pressure of the FC inlet valve 25 increases or as the pressure difference between the downstream pressure and upstream pressure of the FC inlet valve 25 increases. Because the large pressure difference means there is the risk of sudden pressurization of the gas passage between the FC inlet valve 25 and FC outlet valve 26, this constitution allows the generation of resonance and generation of stress of the mechanical components in the event of sudden pressurization to be more effectively suppressed.

### Third Embodiment

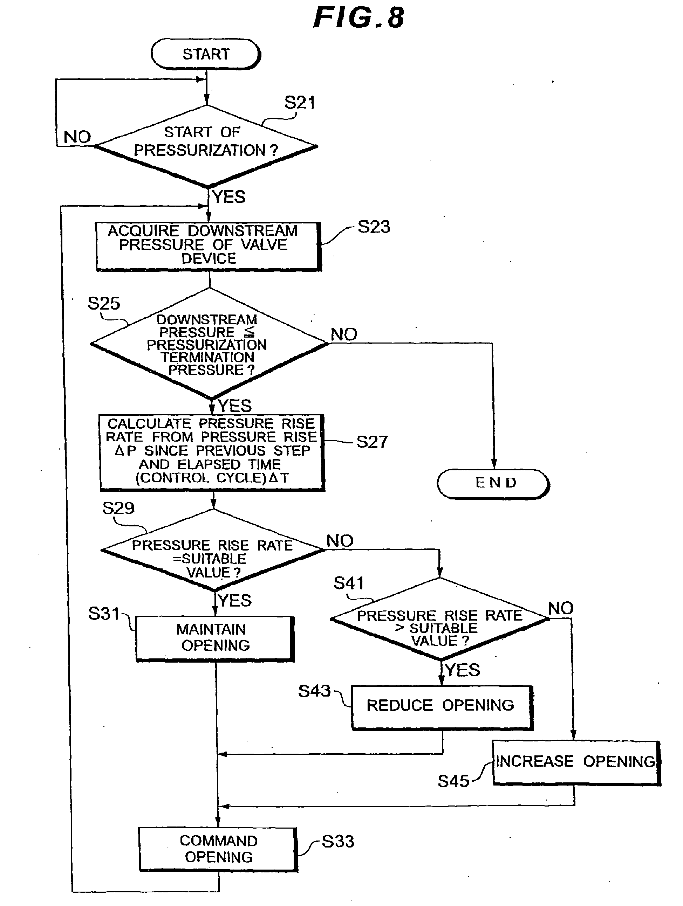

Thereafter, usage of an open/close-type solenoid valve as the FC inlet valve 25 as per the second embodiment above for the control flow according to yet another embodiment of the FC inlet valve 25 during fuel cell startup by the control device 50 will be described next with reference to Fig. 8. Further, the valve device in Fig. 8 is an FC inlet valve 25 in this embodiment.

The principal difference between this embodiment and the second embodiment above is that, whereas, in the second embodiment, feedback control of the valve opening of the FC inlet valve 25 is performed by using the downstream pressure of the FC inlet valve 25, in this embodiment, feedback control of the valve opening of the FC inlet valve 25 is performed so that the pressure rise amount per unit time is fixed, that is, the pressure rise rate is fixed.

First, a judgment of whether the closed space between the FC inlet valve 25 and the FC outlet valve 26 is pressurized, such as a judgment of whether the piping 32 upstream of the FC inlet valve 25 is pressurized to a predetermined pressure, for example, is performed in step S21 in Fig. 8, and, when the judgment result is 'NO', the judgment of step S21 is repeated until the piping 32 upstream of the FC inlet valve 25 is pressurized to a predetermined pressure.

On the other hand, when the judgment result of step S21 is 'YES', the downstream pressure of the FC inlet valve 25 is acquired (step S23). The downstream pressure is measured by using a pressure sensor that is installed within the fuel cell 10, for example. Thereafter, in step S25, it is judged whether the downstream pressure is equal to or less than a pressurization termination pressure (target pressure) and, when the judgment result is 'NO', that is, when the downstream pressure has already exceeded the pressurization termination pressure, the subsequent processing is skipped and the control flow ends.

On the other hand, when the judgment result in step S25 is 'YES', that is, when the downstream pressure acquired in the current control cycle has not yet reached the pressurization termination pressure, the pressure rise rate ΔP/ΔT is calculated from the pressure rise ΔP from the downstream pressure acquired in the previous control cycle and the time elapsed after obtaining the downstream pressure in the previous control cycle until the downstream pressure in the current control cycle is obtained, that is, from the control cycle ΔT of this flow (step S27).

When the pressure rise rate ΔP/ΔT is equal to a predetermined suitable value (step S29: YES), the valve opening of the FC inlet valve 25 is maintained as is (step S31) and the corresponding opening command is sent to the FC inlet valve 25 (step S33), whereupon the processing returns to step S23.

When the judgment result of step S29 is 'NO', it is judged that the pressure rise rate ΔP/ΔT is greater than the predetermined suitable value (step S41) and, when the judgment result is 'YES', after the valve opening of the FC inlet valve 25 is reduced by a predetermined amount (step S43), the corresponding opening command is sent to the FC inlet valve 25 (step S33) and the processing returns to step S23.

When the judgment result of step S41 is 'NO', that is, when the pressure rise rate ΔP/ΔT is smaller than the predetermined suitable value, after the valve opening of the FC inlet valve 25 is increased by a predetermined amount (step S45), the corresponding opening command is sent to the FC inlet valve 25 (step S33) and the processing returns to step S23.

In this embodiment, because the processing following step S27, that is, the processing for setting the valve opening in accordance with the rise rate of the downstream pressure is repeated until the downstream pressure of the FC inlet valve 25 exceeds the pressurization termination pressure, the downstream pressure of the FC inlet valve 25 can be fed back to the valve opening setting of the FC inlet valve 25.

As a result of the FC inlet valve 25 being driven in this manner, in this embodiment, when gradual pressurization is performed so that the pressure difference between the downstream pressure of the FC inlet valve 25 and the pressurization termination pressure gradually decreases, the valve opening is corrected in the direction in which the pressure rise rate ΔP/ΔT of the downstream pressure coincides with a predetermined suitable value. Hence, the generation of resonance and the generation of mechanical component stress during pressurization can be more effectively suppressed.

Further, in this embodiment, because the gas supply speed can be calculated from the pressure rise ΔP, control cycle ΔT, and the total gas passage capacity between the FC inlet valve 25 and FC outlet valve 26, the valve opening of the FC inlet valve 25 may be controlled so that the gas supply speed is fixed (suitable value) instead of controlling the valve opening of the FC inlet valve 25 by using the pressure rise rate ΔP/ΔT.

Furthermore, in the opening reduction processing (opening area reduction processing) of the FC inlet valve 25 in step S43 and/or the opening increase processing (opening area increase processing) of the FC inlet valve 25 in step S45, the opening gain can be determined by means of PID control or the like, for example.

### Fourth Embodiment

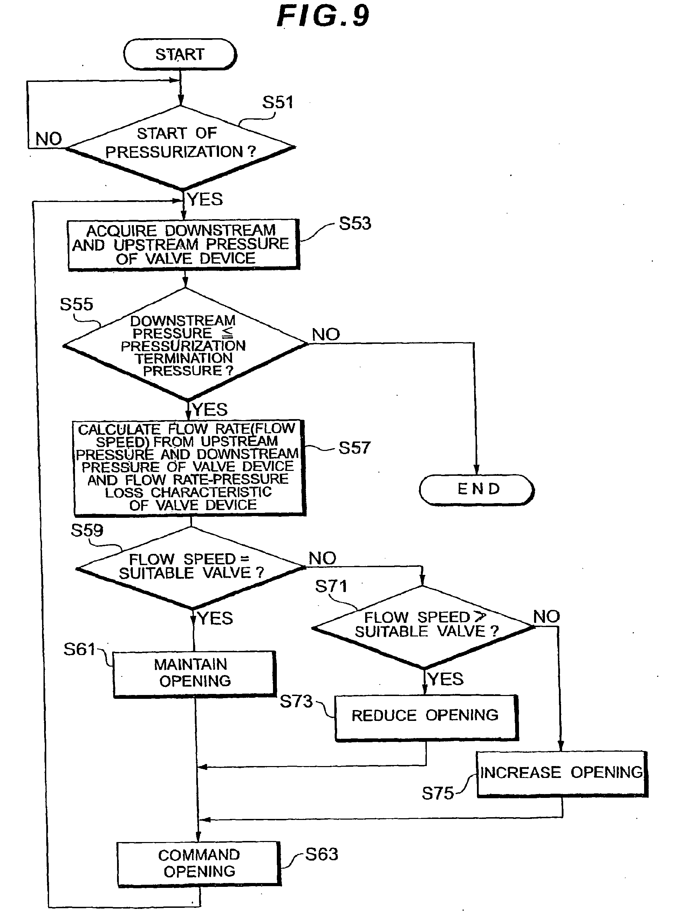

Thereafter, usage of an open/close-type solenoid valve as the FC inlet valve 25 as per the second and third embodiments above for the control flow according to yet another embodiment of the FC inlet valve 25 during fuel cell startup by the control device 50 will be described next with reference to Fig. 9. Further, the valve device in Fig. 9 is an FC inlet valve 25 in this embodiment.

The principal difference between this embodiment and the third embodiment above is that, whereas, in the third embodiment, feedback control of the valve opening of the FC inlet valve 25 is performed so that the pressure rise amount per unit time is fixed, that is, the pressure rise rate is fixed, in this embodiment, feedback control of the valve opening of the FC inlet valve 25 is performed so that the gas supply amount per unit time is fixed, that is, the flow rate is fixed.

First, a judgment of whether the closed space between the FC inlet valve 25 and the FC outlet valve 26 is pressurized, such as a judgment of whether the piping 32 upstream of the FC inlet valve 25 is pressurized to a predetermined pressure, for example, is performed in step S51 in Fig. 9, and, when the judgment result is 'NO', the judgment of step S51 is repeated until the piping 32 upstream of the FC inlet valve 25 is pressurized to a predetermined pressure.

On the other hand, when the judgment result of step S51 is 'YES', the upstream pressure and downstream pressure of the FC inlet valve 25 are acquired (step S53). The upstream pressure of the FC inlet valve 25 is measured by using a pressure sensor that is installed between the FC inlet valve 25 and open/close valve 24 of the piping 32, for example. Further, the downstream pressure of the FC inlet valve 25 is measured by using a pressure sensor that is installed within the fuel cell 10, for example.

Thereafter, in step S55, it is judged whether the downstream pressure is equal to or less than a pressurization termination pressure (target pressure) and, when the judgment result is ''NO', that is, when the downstream pressure has already exceeded the pressurization termination pressure, the subsequent processing is skipped and the control flow ends.

On the other hand, when the judgment result in step S55 is 'YES', that is, when the downstream pressure has not yet reached the pressurization termination pressure, the gas supply amount per unit time passing through the FC inlet valve 25, that is, the flow rate, is maintained by referencing a map that specifies the relationship between the pressure difference between the upstream pressure and downstream pressure acquired in step S53 and the flow rate pressure loss characteristic of the FC inlet valve 25 (step S57).

When the flow rate is equal to a predetermined suitable value (step S59: YES), the valve opening of the FC inlet valve 25 is maintained as is (step S61) and the corresponding opening command is sent to the FC inlet valve 25 (step S63), whereupon the processing returns to step S53.

When the judgment result of step S59 is 'NO', it is judged that the flow rate is greater than the predetermined suitable value (step S71) and, when the judgment result is 'YES', after the valve opening of the FC inlet valve 25 is reduced by a predetermined amount (step S73), the corresponding opening command is sent to the FC inlet valve 25.(step S63) and the processing returns to step S53.

When the judgment result of step S71 is 'NO', that is, when the flow rate is smaller than the predetermined suitable value, after the valve opening of the FC inlet valve 25 is increased by a predetermined amount (step S75), the corresponding opening command is sent to the FC inlet valve 25 (step S63) and the processing returns to step S53.

In this embodiment, because the processing following step S57, that is, the processing for setting the valve opening in accordance with the flow rate determined from the pressure difference between the upstream and downstream sides of the FC inlet valve 25 and the flow rate pressure loss characteristic of the FC inlet valve 25 is repeated until the downstream pressure of the FC inlet valve 25 exceeds the pressurization termination pressure, the downstream pressure of the FC inlet valve 25 can be fed back to the valve opening setting of the FC inlet valve 25.

As a result of the FC inlet valve 25 being driven in this manner, in this embodiment, when gradual pressurization is performed so that the pressure difference between the downstream pressure of the FC inlet valve 25 and the pressurization termination pressure gradually decreases, the valve opening is corrected in the direction in which the flow rate with a certain correlation with the downstream pressure of the FC inlet valve 25 coincides with a predetermined suitable value. Hence, the generation of resonance and the generation of mechanical component stress during pressurization can be more effectively suppressed.

### Fifth Embodiment

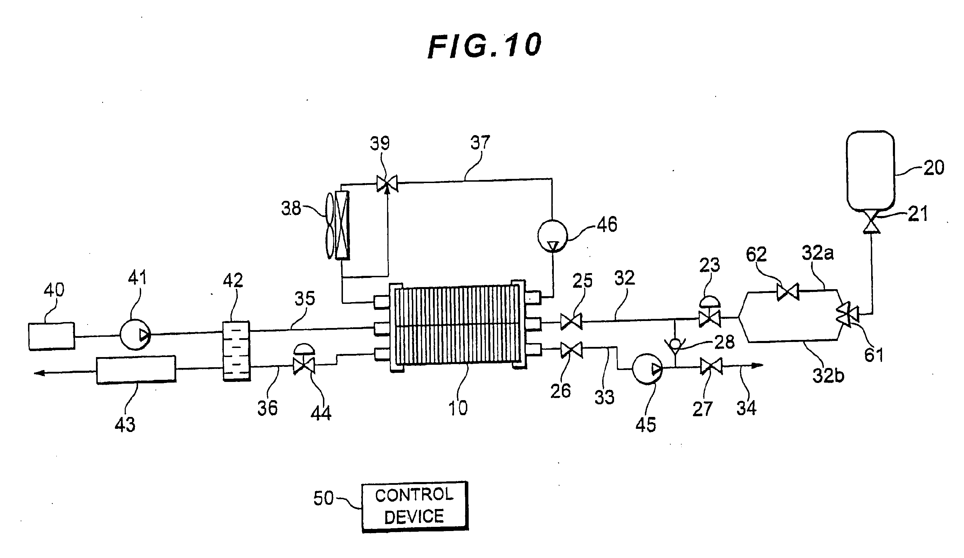

Fig. 10 is a schematic constitutional view of a fifth embodiment of the fuel cell system according to the present invention. The same numerals are assigned to the same constituent elements as those of the first to fourth embodiments shown in Fig. 1 and a description of such elements is omitted. The description focuses on the differences in the constitution and effects of the first embodiment.

The principal difference between this embodiment and the respective embodiments above is, first of all, that whereas, in the first embodiment above, there are no mutually parallel passages in the piping 32 that links the hydrogen tank 20 and fuel cell 10, in this embodiment, a portion of the piping 32 is the mutually parallel passages 32a and 32b. These passages 32a and 32b are of the same diameter.

Thereafter, whereas, in each of the above embodiments, the shutoff valve 21, the regulator valve 23, the open/close valve 24, and the FC inlet valve 25 are installed in that order in the piping 32 starting from the upstream side, in this embodiment, the shutoff valve 21, a changeover valve 61, an aperture diaphragm 62 in the passage 32a, regulator valve 23, and FC inlet valve 25 are installed in that order in the piping 32 that comprises the passages 32a and 32b starting from the upstream side.

Further, whereas, in each of the embodiments above, when the downstream pressure of the FC inlet valve 25 is equal to or less than the pressurization termination pressure, sudden pressurization is suppressed by controlling the valve opening of the FC inlet valve 25, in this embodiment, sudden pressurization is suppressed by selectively using either of the passages 32a and 32b instead of controlling the valve opening of the fuel cell inlet valve 25.

The changeover valve 61 of this embodiment is a flow path switching section capable of electing either to supply hydrogen gas from the hydrogen tank 20 to the fuel cell 10 via the passage 32a in which the aperture diaphragm 62 is installed or to supply hydrogen gas to the fuel cell 10 via the passage 32b that bypasses the aperture diaphragm 62, and the switching direction is controlled by the control device 50.

The aperture diaphragm 62 is a pressure loss generation section that is capable of making the pressure loss of the fluid in the first passage 32a relatively greater than the pressure loss of the other passage . 32b and is constituted to locally narrow the gas flow path cross-section of the passage 32a. The aperture diaphragm 62 of this embodiment is an aperture diaphragm device that sets the aperture amount between the upstream and downstream sides, for example, at a predetermined set value.

According to this constitution, when the pressure difference between the downstream pressure and the pressurization termination pressure (target pressure) of the FC inlet valve 25, or the pressure difference between the upstream and downstream sides of the FC inlet valve 25 is equal to or more than a predetermined value at initial pressurization as at the startup of the fuel cell 10, for example, the pressure difference can be gradually reduced by suppressing the pressurization speed by switching the changeover valve 61 so that the hydrogen gas from the hydrogen tank 20 is supplied to the fuel cell 10 via the passage 32a with a large pressure loss.

On the other hand, when the pressure difference is less than a predetermined value as is the case during a normal operation, the pressure loss caused by the presence of the aperture diaphragm 62 can be avoided by bypassing the aperture diaphragm 62 by switching the changeover valve 61 so that hydrogen gas from the hydrogen tank 20 is supplied to the fuel cell 10 via the passage 32b with the smaller pressure loss.

As described hereinabove, according to the fuel cell system 11 of this embodiment, the generation of resonance and the generation of mechanical component stress in the event of sudden pressurization can be suppressed by means of only single flow path switching using the changeover valve 61 instead of performing complex control that changes the valve opening of the FC inlet valve 25 continuously or intermittently as per the first to fourth embodiments.

Further, in order to afford the first mutually parallel passage 32a a larger pressure loss than that of the other passage 32b, as well as providing the aperture diaphragm 62 in the passage 32a as detailed earlier, implementation is also possible by affording passage 32a a smaller diameter than that of the other passage 32b, providing a bend or elbow midway along the passage 32a, or providing an element that increases the fluid resistance such as a filter midway along the passage 32a, for example.

In addition, the changeover valve 61 is able to cause not just one but both passages 32a and 32b to be blocked or connected.

### Sixth Embodiment

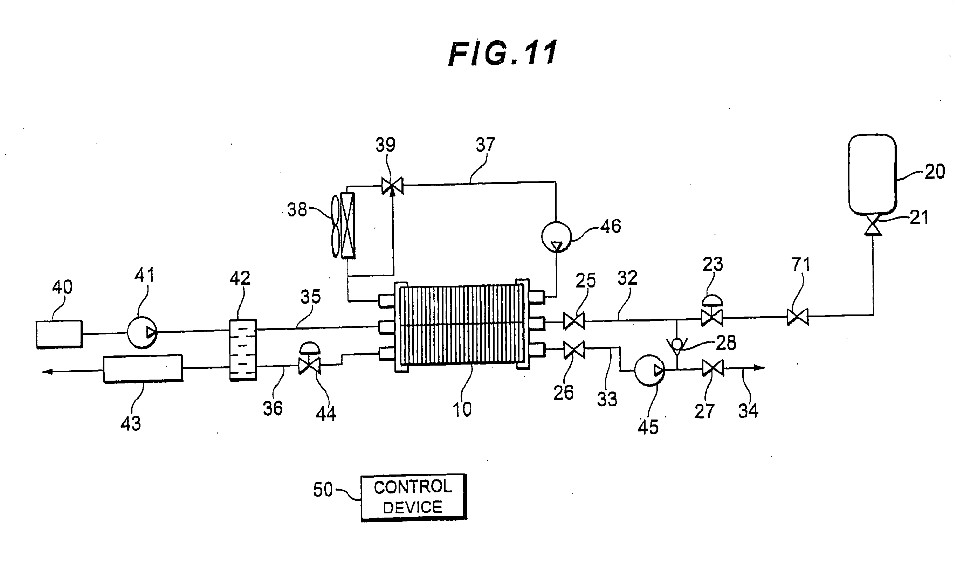

Furthermore, as shown in Fig. 11, a variable aperture diaphragm 71 that is able to variably control upstream and downstream aperture diaphragms by means of the control device 50 may be installed between the shutoff valve 21 and regulator valve 23 of the piping 32 instead of the changeover valve 61, passages 32a and 32b, and aperture diaphragm 62 in Fig. 10.

So too with the fuel cell system 12 of this constitution, when the pressure difference is equal to or more than a predetermined value at initial pressurization as is the case at the startup of the fuel cell 10, for example, because the pressurization speed can be suppressed by producing a pressure loss in the hydrogen gas from the hydrogen tank 20 by exercising control to afford the variable aperture diaphragm 71 a larger aperture, the pressure difference can be made to decrease gradually.

On the other hand, when the pressure difference is less than a predetermined value as is the case during a normal operation, the pressure loss caused by the presence of the variable aperture diaphragm 71 can be avoided because the generation of a pressure loss in the hydrogen gas from the hydrogen tank 20 can, as far as possible, be avoided by controlling the variable aperture diaphragm 71 for a larger opening.

### Seventh Embodiment

The principal difference between this embodiment and the first to fourth embodiments above is that, whereas, in each of the embodiments above, when the downstream pressure of the FC inlet valve 25 is equal to or less than the pressurization termination pressure, sudden pressurization is suppressed by controlling the opening of the FC inlet valve 25, in this embodiment, sudden pressurization is suppressed by controlling the opening of the shutoff valve 21 which is the source valve of the hydrogen tank 20 instead of controlling the opening of the FC inlet valve 25.

According to this constitution, in a fuel cell system in which, among the valve devices that allow and prohibit the supply of hydrogen gas to the fuel cell 10, except for the shutoff valve 21, the open/close valve 24 and FC inlet valve 25 and the regulator valve 23 that regulates (reduces) the pressure of the hydrogen gas supply to the fuel cell 10 are not installed on the piping 32 which is the fuel gas supply passage, sudden pressurization can be suppressed by controlling the shutoff valve 21.

### Eighth Embodiment

In a fuel cell system according to the first to seventh embodiments, the opening of the respective valve devices installed on the piping 32 and 36 (the shutoff valve 21, open/close valve 24, FC inlet valve 25 and the regulator valve 44 and so forth) and the amount of movement of the compressor 41 installed on the piping 36 may be controlled in coordinated manner.

According to this constitution, the supply pressure (gas pressure) of the hydrogen gas to the fuel cell 10 can be controlled principally by at least one of the shutoff valve 21, open/close valve 24, FC inlet valve 25 installed on the piping 32 through which high pressure gas flows and, accordingly, regulation of the air supply pressure (gas pressure) to the fuel cell 10 by controlling at least one of the valve opening of the regulator valve 44 installed on the piping 36 and the amount of movement (supplied air amount) of the compressor 41 installed on the piping 35 is possible. As a result, the pressure difference between the pressure of the hydrogen gas supply from the piping 32 to the fuel cell 10 and the pressure of the air supply from the piping 35 to the fuel cell 10 can be controlled in a suitable range.

As per the respective embodiments above in particular, in a fuel cell system in which a fuel cell 10 has an electrolyte membrane sandwiched between an anode electrode and a cathode electrode, the electrolyte membrane can be protected from damage and so forth by suppressing an excessive increase in the pressure difference across the electrodes (the pressure difference between the hydrogen gas supply pressure and the air supply pressure).

The specific details of the coordinated control according to this embodiment will be described next.
(1) The cathode pressure is observed by using a pressure sensor that is installed within the fuel cell 10 or between the fuel cell 10 and the regulator valve 44, for example, and pressurization on the anode side is implemented with the cathode pressure as the target value. More specifically, pressurization of the anode side is implemented in accordance with the pressure increase on the cathode side. Conversely, the pressurization on the cathode side may be implemented with the anode pressure as the target value.
(2) When performing pressurization of the anode and cathode sides, the pressure difference across the electrodes is observed by means of a pressure sensor that is installed in the fuel cell 10 and, in order that the pressure difference not exceed the permitted pressure (design pressure resistance), the pressurization or pressure regulation of the high pressure side of the anode and cathode may be controlled in the direction that the pressurization or regulation is retarded. For example, the pressurization or regulation of the high pressure side can be retarded by reducing the amount of supplied air of the compressor 41, reducing the speed in which the regulator valve 44 is closed, or reducing the opening speed of the valve device of the anode side (the FC inlet valve 25, for example).
(3) Contrary to (2) above, the pressurization or regulation of the low-pressure side of the anode and cathode may be controlled in the direction in which the pressurization or regulation is faster. For example, the speed of the pressurization or regulation of the low-pressure side can be increased by increasing the air supply amount of the compressor 41, increasing the closing speed of the regulator valve 44, or increasing the opening speed of a valve device on the anode side (FC inlet valve 25, for example), or the like.
(4) When performing pressurization of the anode and cathode sides, the pressure difference across the electrodes is observed by means of a pressure sensor that is installed in the fuel cell 10 and, in order that the pressure difference not exceed the permitted pressure (design pressure resistance), the pressure of the high pressure side may be reduced. For example, the pressure of the high pressure side can be reduced by controlling the regulator valve 44 for a larger opening, reducing the amount of supplied air of the compressor 41, reducing the speed in which the regulator valve 44 is closed, or reducing the pressure of the anode side by opening a discharge valve 27.
(5) Contrary to (4) above, the low-pressure side may be pressurized so that the pressure difference across the electrodes is no more than the permitted pressure (design pressure resistance). For example, the low-pressure side can be pressurized by controlling the regulator valve 44 toward a closed position, increasing the air supply amount of the compressor 41, increasing the closing speed of the regulator valve 44, or increasing the opening speed of a valve device on the anode side (FC inlet valve 25, for example), or the like.

Further, (1) to (5) above represent control that assumes a variable opening solenoid that permits valve device opening commands. However, when the valve device is an open/close-type solenoid, substantially the same control as (1) to (5) can be implemented by implementing duty control.

### Further embodiments

Embodiments of the present invention were described in detail hereinabove but the specific constitution is not limited to these embodiments and design modifications and so forth that do not depart from the spirit of the present invention are also included in the scope of the present invention.

For example, in each of the above embodiments, the shutoff valve 21, regulator valve 23, open/close valve 24 and FC inlet valve 25 or the like are installed on the piping 32. However, if an open/close-type valve device is installed in any location of the piping 32 (the shutoff valve 21 of the hydrogen tank 20, for example), the other valves (regulator valve 23, open/close valve 24, FC inlet valve 25, for example) need not be installed.

Furthermore, the valve devices for controlling the opening area are not limited to the valves 21 and 23 to 25 installed in the passage of the hydrogen supply system (piping 32) and may be, in addition to the valves 26, 28 installed in a passage (one of the piping 33 is connected to the piping 32) of the hydrogen circulation system that returns discharged anode offgas from the fuel cell 10 to the hydrogen supply system and the discharge valve 27 installed in the passage (piping 34) of the hydrogen discharge system that discharges anode offgas to the outside, the valve device for controlling the opening area may be an regulator valve 44 installed in the passage of the air discharge system (piping 36) that discharges cathode offgas from the fuel cell 10.

In addition, an embodiment in which an injector is installed on the piping 32 instead of the regulator valve 23 is possible.

According to the present invention, even when there is the risk of sudden pressurization of the gas passage upon receiving a supply of high-pressure or pressurized reactive gas or reactive offgas as is the case when the system is started up or restarted after an intermittent operation, for example, because the opening of the valve device is controlled so that the opening area increases continuously or intermittently in accordance with the degree of the pressure difference between the upstream and downstream sides of the valve device, the generation of strange noise and the generation of stress of the mechanical components can be suppressed.

Accordingly, the present invention can be widely used in fuel cell systems with such requirements.

## Claims

1. A fuel cell system (1) comprising:
a fuel cell (10) that generates power upon receiving a supply of a reactive gas and a reaction gas and that discharges a reactive offgas and a reaction offgas,
a gas passage (32, 33, 34) in which the reactive gas or the reactive offgas flows, the gas passage consisting of:
a first piping (32), through which fuel gas as reactive gas is supplied to an anode of the fuel cell (10),
a gas passage in the fuel cell (10),
a third piping (33), through which anode offgas as reactive offgas flows, and
a discharge pipe (34), through which said anode offgas is discharged to the outside,
the fuel cell system further comprising:
a valve device (25) that is installed on the first piping (32),
a second piping (35), through which air as reaction gas is supplied to a cathode of the fuel cell (10),
a fourth piping (36), through which cathode offgas as reaction offgas is discharged to the outside, and
a control device (50) that controls opening of the valve device, wherein, when the pressure difference between upstream and downstream sides of the valve device (25) is equal to or more than a predetermined value, the control device (50) controls the opening of the valve device (25) in accordance with a degree of the pressure difference so that an opening area increases continuously or intermittently.

2. The fuel cell system according to claim 1, wherein, when a gas pressure in the first piping (32), the gas passage in the fuel cell (10), the third piping (33) or the discharge pipe (34) increases, the control device (50) controls the opening of the valve device (25) in accordance with the degree of said pressure difference between upstream and downstream sides of the valve device (25) so that the opening area increases continuously or intermittently.

3. The fuel cell system according to claim 1, wherein, when the downstream pressure of the valve device is equal to or less than a target pressure, the control device controls the opening of the valve device in accordance with the degree of the pressure difference between the downstream pressure and target pressure.

4. The fuel cell system according to claim 1 or 2, wherein, the larger the pressure difference, the smaller the amount of change in the opening area per hour of the valve device.

5. The fuel cell system according to claim 1 or 2, wherein, the larger the volume of closed space downstream of the valve device is, the smaller the amount of change in the opening area per hour of the valve device.

6. The fuel cell system according to claim 1 or 2, wherein the valve device is at least one of an open/close-type solenoid valve or a variable opening-type solenoid valve.

7. The fuel cell system according to claim 6, wherein, when the valve device is an open/close-type solenoid valve, the opening area of the valve device changes in accordance with duty control.

8. The fuel cell system according to claim 1 or 2, wherein the valve device is a solenoid valve that is provided downstream of a regulator valve (23) that is provided on the first piping (32).

9. The fuel cell system according to claim 1 or 2, wherein the amount of change in the opening area per hour of the valve device is set on the basis of the downstream pressure of the valve device.

10. The fuel cell system according to claim 1, wherein the valve device is a source valve (21) of a high-pressure gas tank that is connected to the gas passage.

11. The fuel cell system according to claim 1 or 2, wherein a plurality of the valve devices (21, 23, 24, 25) are provided in series on the first piping (32) and the opening area of the downstream-side valve device is controlled in correspondence with an open/closed state of the upstream-side valve device.

12. The fuel cell system according to claim 1 or 2, wherein the gas pressure supplied to an anode side of the fuel cell and the gas pressure supplied to an cathode side undergo coordinated control.

13. The fuel cell system according to claim 1 or 2, wherein a portion of the gas passage (32, 33, 34) is constituted by mutually parallel passages, one of which is a passage that has a larger pressure loss than the other passage and, when the pressure difference is equal to or more than a predetermined value, the passage with a large pressure loss is used instead of continuously or intermittently increasing the opening area of the valve device.

14. The fuel cell system according to claim 1 or 2, wherein the fuel cell has an electrolyte membrane sandwiched between an anode electrode and a cathode electrode.

15. The fuel cell system according to claim 1 or 2, wherein, at the startup of the fuel cell, the control device controls the opening of the valve device so that the opening area increases continuously or intermittently.

## Patentansprüche

1. Brennstoffzellensystem (1), aufweisend:
eine Brennstoffzelle (10), die Leistung ansprechend auf die Zufuhr eines reaktiven Gases und eines Reaktionsgases erzeugt und reaktives Abgas und Reaktionsabgas abgibt,
eine Gasleitung (32, 33, 34), in welcher das reaktive Gas oder das reaktive Abgas strömt, wobei die Gasleitung gebildet wird durch:
eine erste Leitung (32), durch welche Brenngas als reaktives Gas einer Anode der Brennstoffzelle (10) zugeführt wird,
eine Gasleitung in der Brennstoffzelle (10),
eine dritte Leitung (33) durch welche Anodenabgas als reaktives Abgas strömt, und
eine Auslassleitung (34), durch welche das Anodenabgas nach außen abgegeben wird,
wobei das Brennstoffzellensystem weiter aufweist:
eine Ventilvorrichtung (25), die an der ersten Leitung (32) installiert ist,
eine zweiten Leitung (35), durch welche Luft als Reaktionsgas einer Katode der Brennstoffzelle (10) zugeführt wird,
eine vierte Leitung (36), durch welche Katodenabgas als Reaktionsabgas nach außen abgegeben wird, und
eine Steuervorrichtung (50) die das Öffnen der Ventilvorrichtung steuert, wobei, wenn eine Druckdifferenz zwischen stromaufwärtigen und stromabwärtigen Seiten der Ventilvorrichtung (25) gleich oder größer ist, als ein vorgegebener Wert, die Steuervorrichtung (50) die Öffnung der Ventilvorrichtung (25) entsprechend eines Grades der Druckdifferenz steuert, so dass ein Öffnungsbereich kontinuierlich oder intermittierend zunimmt.

2. Brennstoffzellensystem nach Anspruch 1, wobei, wenn ein Gasdruck in der ersten Leitung (32), der Gasleitung in der Brennstoffzelle (10), der dritten Leitung (33) oder der Auslassleitung (34) zunimmt, die Steuervorrichtung (50) die Öffnung der Ventilvorrichtung (25) entsprechend dem Grad der Druckdifferenz zwischen den stromaufwärtigen und stromabwärtigen Seiten der Ventilvorrichtung (25) steuert, so dass der Öffnungsbereich kontinuierlich oder intermittierend zunimmt.

3. Brennstoffzellensystem nach Anspruch 1, wobei, wenn der stromabwärtige Druck der Ventilvorrichtung gleich oder geringer ist, als ein Solldruck, die Steuervorrichtung die Öffnung der Ventilvorrichtung gemäß dem Grad der Druckdifferenz zwischen der stromabwärtigen Seite und dem Solldruck steuert.

4. Brennstoffzellensystem nach Anspruch 1 oder 2, wobei, je größer die Druckdifferenz ist, der Änderungsbetrag des Öffnungsbereichs pro Stunde der Ventilvorrichtung umso kleiner wird.

5. Brennstoffzellensystem nach Anspruch 1 oder 2, wobei, je größer das Volumen eines geschlossenen Raumes stromab der Ventilvorrichtung ist, der Änderungsbetrag des Öffnungsbereichs pro Stunde der Ventilvorrichtung umso kleiner wird.

6. Brennstoffzellensystem nach Anspruch 1 oder 2, wobei die Ventilvorrichtung zumindest einen Solenoidventil vom Öffnen-/Schließen-Typ oder ein Solenoidventil vom variablen-Öffnen-Typ ist.

7. Brennstoffzellensystem nach Anspruch 6, wobei, wenn die Ventilvorrichtung ein Solenoidventil vom Öffnen-/Schließen-Typ ist, der Öffnungsbereich der Ventilvorrichtung sich entsprechend einer Betriebssteuerung ändert.

8. Brennstoffzellensystem nach Anspruch 1 oder 2, wobei die Ventilvorrichtung ein Solenoidventil ist, das stromab eines Regelventils (23) angeordnet ist, das in der ersten Leitung (32) angeordnet ist.

9. Brennstoffzellensystem nach Anspruch 1 oder 2, wobei der Änderungsbetrag des Öffnungsbereichs pro Stunde der Ventilvorrichtung auf Basis des stromabwärtigen Drucks der Ventilvorrichtung eingestellt wird.

10. Brennstoffzellensystem nach Anspruch 1, wobei die Ventilvorrichtung ein Auslassventil (21) eines Hochdruckgastanks ist, der mit der Gasleitung verbunden ist.

11. Brennstoffzellensystem nach Anspruch 1 oder 2, wobei eine Mehrzahl von Ventilvorrichtungen (21, 23, 24, 25) in Reihe an der ersten Leitung (32) angeordnet ist, und der Öffnungsbereich der stromabwärtigen Ventilvorrichtung entsprechend einen geöffneten/geschlossenen Zustand der stromaufwärtigen Ventilvorrichtung gesteuert wird.

12. Brennstoffzellensystem nach Anspruch 1 oder 2, wobei der an der Anodenseite der Brennstoffzelle anliegende Gasdruck und der an der Katodenseite anliegende Gasdruck einer koordinierten Steuerung unterliegen.

13. Brennstoffzellensystem nach Anspruch 1 oder 2, wobei ein Teil der Gasleitung (32, 33, 34) aus zueinander parallelen Leitungen gebildet ist, wobei eine Leitung eine Leitung ist, die einen größeren Druckverlust als die andere Leitung aufweist, und, wenn die Druckdifferenz gleich oder größer ist, als ein vorgegebener Wert, die Leitung mit einem hohen Druckverlust anstelle des kontinuierlichen oder intermittierenden Erhöhens des Öffnungsbereichs der Ventilvorrichtung verwendet wird.

14. Brennstoffzellensystem nach Anspruch 1 oder 2, wobei die Brennstoffzelle eine Elektrolytmembran aufweist, die zwischen einer Anodenelektrode und einer Katodenelektrode sandwichartig aufgenommen ist.

15. Brennstoffzellensystem nach Anspruch 1 oder 2, wobei die Steuervorrichtung, beim Start der Brennstoffzelle, die Öffnung der Ventilvorrichtung derart steuert, dass der Öffnungsbereich kontinuierlich oder intermittierend zunimmt.

## Revendications

1. Système de pile à combustible (1) comprenant :
une pile à combustible (10) qui génère de l'énergie lors de la réception d'une alimentation en un gaz réactif et un gaz de réaction et qui décharge un gaz de dégagement réactif et un gaz de dégagement de réaction,
un passage de gaz (32, 33, 34) dans lequel le gaz réactif ou le gaz de dégagement réactif circule, le passage de gaz consistant en :
une première tuyauterie (32), à travers laquelle un combustible gazeux en tant que gaz réactif est fourni à une anode de la pile à combustible (10),
un passage de gaz dans la pile à combustible (10),
une troisième tuyauterie (33), à travers laquelle un gaz de dégagement d'anode en tant que gaz de dégagement réactif circule, et
un tuyau de décharge (34), à travers lequel ledit gaz de dégagement d'anode est déchargé à l'extérieur,
le système de pile à combustible comprenant en outre :
un dispositif formant vanne (25) qui est installé sur la première tuyauterie (32),
une deuxième tuyauterie (35), à travers laquelle de l'air en tant que gaz de réaction est fourni à une cathode de la pile à combustible (10),
une quatrième tuyauterie (36), à travers laquelle un gaz de dégagement de cathode en tant que gaz de dégagement de réaction est déchargé à l'extérieur, et
un dispositif de commande (50) qui commande l'ouverture du dispositif formant vanne,
dans lequel, lorsque la différence de pression entre les côtés amont et aval du dispositif formant vanne (25) est égale ou supérieure à une valeur prédéterminée, le dispositif de commande (50) commande l'ouverture du dispositif formant vanne (25) en fonction d'un degré de la différence de pression de sorte qu'une aire d'ouverture augmente continûment ou de manière intermittente.

2. Système de pile à combustible selon la revendication 1, dans lequel, lorsqu'une pression de gaz dans la première tuyauterie (32), le passage de gaz dans la pile à combustible (10), la troisième tuyauterie (33) ou le tuyau de décharge (34) augmente, le dispositif de commande (50) commande l'ouverture du dispositif formant vanne (25) en fonction du degré de ladite différence de pression entre les côtés amont et aval du dispositif formant vanne (25) de sorte que l'aire d'ouverture augmente continûment ou de manière intermittente.

3. Système de pile à combustible selon la revendication 1, dans lequel, lorsque la pression en aval du dispositif formant vanne est égale ou inférieure à une pression cible, le dispositif de commande commande l'ouverture du dispositif formant vanne en fonction du degré de la différence de pression entre la pression en aval et la pression cible.

4. Système de pile à combustible selon la revendication 1 ou 2, dans lequel, plus la différence de pression est grande, plus la quantité de changement de l'aire d'ouverture par heure du dispositif formant vanne est faible.

5. Système de pile à combustible selon la revendication 1 ou 2, dans lequel, plus le volume de l'espace fermé en aval du dispositif formant vanne est grand, plus la quantité de changement de l'aire d'ouverture par heure du dispositif formant vanne est faible.

6. Système de pile à combustible selon la revendication 1 ou 2, dans lequel le dispositif formant vanne est au moins l'une d'une électrovanne du type ouverte/fermée ou d'une électrovanne du type à ouverture variable.

7. Système de pile à combustible selon la revendication 6, dans lequel, lorsque le dispositif formant vanne est une électrovanne du type ouverte/fermée, l'aire d'ouverture du dispositif formant vanne change conformément à une commande cyclique.

8. Système de pile à combustible selon la revendication 1 ou 2, dans lequel le dispositif formant vanne est une électrovanne qui est prévue en aval d'une vanne de régulateur (23) qui est prévue sur la première tuyauterie (32).

9. Système de pile à combustible selon la revendication 1 ou 2, dans lequel la quantité de changement de l'aire d'ouverture par heure du dispositif formant vanne est fixée sur la base de la pression en aval du dispositif formant vanne.

10. Système de pile à combustible selon la revendication 1, dans lequel le dispositif formant vanne est une vanne de source (21) d'un réservoir de combustible à haute pression qui est relié au passage de gaz.

11. Système de pile à combustible selon la revendication 1 ou 2, dans lequel une pluralité des dispositifs formant vanne (21, 23, 24, 25) sont prévus en série sur la première tuyauterie (32) et l'aire d'ouverture du dispositif formant vanne côté aval est commandée en correspondance avec un état ouvert/fermé du dispositif formant vanne côté amont.

12. Système de pile à combustible selon la revendication 1 ou 2, dans lequel la pression de gaz fournie à un côté d'anode de la pile à combustible et la pression de gaz fournie à un côté de cathode font l'objet d'une commande coordonnée.

13. Système de pile à combustible selon la revendication 1 ou 2, dans lequel une partie du passage de gaz (32, 33, 34) est constituée par des passages mutuellement parallèles, l'un d'eux étant un passage qui a une plus grande perte de pression que l'autre passage et, lorsque la différence de pression est égale ou supérieure à une valeur prédéterminée, le passage avec une grande perte de pression est utilisé au lieu d'augmenter continûment ou de manière intermittente l'aire d'ouverture du dispositif formant vanne.

14. Système de pile à combustible selon la revendication 1 ou 2, dans lequel la pile à combustible comporte une membrane d'électrolyte prise en sandwich entre une électrode d'anode et une électrode de cathode.

15. Système de pile à combustible selon la revendication 1 ou 2, dans lequel, au démarrage de la pile à combustible, le dispositif de commande commande l'ouverture du dispositif formant vanne de sorte que l'aire d'ouverture augmente continûment ou de manière intermittente.
